(19) Europäisches Patentamt
European Patent Office
Office européen des brevets

(11) **EP 3 012 985 A1**

(12) **EUROPEAN PATENT APPLICATION**
published in accordance with Art. 153(4) EPC

(43) Date of publication:
27.04.2016 Bulletin 2016/17

(51) Int Cl.:
*H04B 17/00* (2015.01)      *G10L 25/18* (2013.01)
*H04R 25/00* (2006.01)

(21) Application number: 14813403.4

(22) Date of filing: 16.06.2014

(86) International application number:
PCT/JP2014/065889

(87) International publication number:
WO 2014/203854 (24.12.2014 Gazette 2014/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 17.06.2013 JP 2013126672

(71) Applicant: National Institute of Advanced
Industrial Science
and Technology
Tokyo 100-8921 (JP)

(72) Inventors:
• HOTEHAMA, Takuya
Ikeda-shi
Osaka 563-8577 (JP)
• NAKAGAWA, Seiji
Ikeda-shi
Osaka 563-8577 (JP)

(74) Representative: Isarpatent
Patent- und Rechtsanwälte Behnisch Barth
Charles
Hassa Peckmann & Partner mbB
Friedrichstrasse 31
80801 München (DE)

(54) **METHOD AND DEVICE FOR MEASUREMENT OF PROPAGATION DELAY CHARACTERISTIC IN MULTIPATH PROPAGATION ENVIRONMENT, AND EXTERNAL AUDIO PERCEPTION DEVICE**

(57)    A method for measuring propagation delay characteristics in a multipath propagation environment, wherein the propagation delay characteristics are measured between a transmission means and a reception means provided in the multipath propagation environment, the method comprising a transmission step of transmitting a measurement signal comprising an information signal having a predetermined frequency from the transmission means; a reception step of receiving the measurement signal that has traveled along a plurality of propagation paths by the reception means; a calculation step of performing Hilbert transform on the received information signal to calculate instantaneous frequency characteristics from a resulting Hilbert transform signal; and an output step of outputting propagation delay characteristics corresponding to the frequency of the information signal based on the instantaneous frequency characteristics.

Fig.1

## Description

[Technical Field]

The present invention relates to a method for measuring propagation delay characteristics in a multipath propagation environment, and an external sound perception device.

[Background Art]

Multipath propagation or multiwave propagation refers to a state where two or more propagation paths exist due to, for example, a difference in reflection/refraction or vibration mode when sound, vibration, and electromagnetic waves propagate through space. It is thought that there is multipath propagation when, for example, a cellphone or television terminal receives electromagnetic waves transmitted from a base station, or when the audience hears the sound of a violin on a concert hall stage.

In a multipath propagation environment, the phase interference of different paths called multipath interference occurs, and a reception (response) signal is distorted. In the case of wireless communications, the greater the distortion is, the less likely the data is correctly delivered. Examples of ways to address multipath interference in communications include orthogonal frequency-division multiplexing (OFDM) and other modulation methods that are highly capable of dealing with multipaths, diversity techniques by which signals are transmitted and received with multiple antennae, and the like. Adding signal processing based on delay characteristics of propagation paths is also one way of addressing multipath interference.

In a multipath propagation environment, conventional techniques used for expressing the delay characteristics of propagation paths are, first, an impulse response (for example, Non-Patent Literature 1), and, second, a delay profile (for example, Patent Literature 1). These techniques respectively show the instantaneous and time-average structures of a response resulting from inputting a very short signal called an impulse into a multipath propagation system. The transfer characteristics of a linear time-invariant system are fully characterized by its impulse response.

In the case where a multipath propagation environment includes a path that is altered depending on the frequency, e.g., diffraction, its delay characteristics are altered depending on the frequency. A third conventional technique to know the frequency dependency of delay characteristics is calculation of a spectrogram obtained by repetitive short time Fourier transformation (STFT) (for example, Non-Patent Literature 2).

[Citation List]

[Patent Literature]

Patent Literature 1: JP H9-8768A

[Non-Patent Literature]

    Non-Patent Literature 1: Yoshio Karasawa, Multipath Propagation Theory and Modeling in Wideband Mobile Radio - Bridging between Propagation and Systems by the ETP Model -, IEICE TRANS. COMMUN., VOL. J83-B, 12, pp. 1651-1660 (2000)
    Non-Patent Literature 2: "ARTA" Software at http://www.artalabs.hr/download.htm on the internet

[Summary of Invention]

[Technical Problem]

However, there is a problem that the above-described first and second conventional techniques both show delay characteristics of a wideband signal used for an impulse response or delay profile calculation, and thus delay characteristics with respect to a specific frequency and the frequency dependency of the delay characteristics are unclear. Moreover, there is a problem with the above-described third conventional technique that it is difficult to obtain accurate delay characteristics for every frequency because frequency resolution and time resolution are dependent on the time width of the window function of Fourier transform.

Accordingly, an object of the present invention is to provide a method and a device for measuring propagation delay characteristics in a multipath propagation environment, capable of easily and accurately measuring propagation delay characteristics with respect to a desired frequency in the multipath propagation environment.

Moreover, another object of the present invention is to provide an external sound perception device capable of clearly perceiving an external sound by utilizing the results of measuring propagation delay characteristics in a multipath propagation environment.

[Solution Problem]

The aforementioned object of the present invention is achieved by a method for measuring propagation delay characteristics in a multipath propagation environment, wherein the propagation delay characteristics are measured between a transmission means and a reception means provided in the multipath propagation environment, the method comprising:

    a transmission step of transmitting a measurement signal comprising an information signal having a predetermined frequency from the transmission means; a reception step of receiving the measurement signal that has traveled along a plurality of propagation paths by the reception means; a calculation step of performing Hilbert transform on the received information signal to calculate instantaneous frequency characteristics from a resulting Hilbert transform signal; and an output step of outputting propagation delay characteristics corresponding to the frequency of the information signal based on the instantaneous frequency characteristics.

In this measurement method, it is preferable that the output step comprises normalizing the instantaneous frequency characteristics to output normalized instantaneous frequency characteristics.

The method is capable of measuring the propagation delay characteristics of bone-conducted ultrasound in the head of a living body.

Moreover, the aforementioned object of the present invention is achieved by a device for measuring propagation delay characteristics in a multipath propagation environment, wherein the propagation delay characteristics are measured between a transmission means and a reception means provided in the multipath propagation environment, wherein the transmission means is configured to transmit a measurement signal comprising an information signal having a predetermined frequency, and the reception means is configured to receive the measurement signal that has traveled along a plurality of propagation paths; and the device comprises:

a calculation unit for performing Hilbert transform on the information signal received by the reception means to calculate instantaneous frequency characteristics from a resulting Hilbert transform signal, and an output unit for outputting propagation delay characteristics corresponding to the frequency of the information signal based on the instantaneous frequency characteristics.

Furthermore, the aforementioned object of the present invention is achieved by an external sound perception device comprising a directional microphone into which an external sound is inputted, a vibration signal generation means for generating a vibration signal based on a sound signal inputted into the directional microphone, a signal processing unit for processing the vibration signal to generate an output signal, and a vibrator for transferring mechanical vibrations to a living body based on the output signal, wherein the external sound perception device further comprises:

a transmission means and a reception means that are for attachment to different parts of a human body and are capable of measuring propagation delay characteristics in a multipath propagation environment, wherein the transmission means is configured to transmit a measurement signal comprising an information signal having a predetermined frequency via the vibrator, and the reception means is configured to receive the measurement signal that has traveled along a plurality of propagation paths of the human body, a calculation unit for performing Hilbert transform on the information signal received by the reception means to calculate instantaneous frequency characteristics from a resulting Hilbert transform signal, and an output unit for outputting propagation delay characteristics corresponding to the frequency of the information signal based on the instantaneous frequency characteristics, and the signal processing unit performs signal processing on the vibration signal based on the propagation delay characteristics.

[Advantageous Effects of Invention]

According to the present invention, it is possible to provide a method and a device for measuring propagation delay characteristics in a multipath propagation environment, capable of easily and accurately measuring propagation delay characteristics with respect to a desired frequency in the multipath propagation environment.

Moreover, according to the present invention, it is possible to provide an external sound perception device capable of clearly perceiving an external sound by using the results of measuring propagation delay characteristics in a multipath propagation environment.

[Brief Description of Drawings]

[FIG. 1] FIG. 1 is a block diagram of a device for measuring propagation delay characteristics according to one embodiment of the present invention.
[FIG. 2] FIG. 2 is a diagram showing one example of a transmission signal in the measurement device shown in FIG. 1.
[FIG. 3] FIG. 3 is a diagram showing one example of an output screen in the measurement device shown in FIG. 1.
[FIG. 4] FIG. 4 shows one example of time waveforms of measured information signals in the measurement device shown in FIG. 1. FIG. 4(a) is a diagram showing the time waveforms of measurement signals arranged next to each other, and FIG. 4(b) is a diagram showing superposed time waveforms of all frequencies shown in FIG. 4(a).

[FIG. 5] FIG. 5 shows one example of normalized instantaneous frequency waveforms in the measurement device shown in FIG. 1. FIG. 5(a) is a diagram showing normalized instantaneous frequency waveforms arranged next to each other, and FIG. 5(b) is a diagram showing superposed normalized instantaneous frequency waveforms of all frequencies shown in FIG. 5(a).

[FIG. 6] FIG. 6 is a block diagram of an external sound perception device according to one embodiment of the present invention.

[FIG. 7] FIG. 7 is a diagram showing the overall configuration of the external sound perception device shown in FIG. 6.

[FIG. 8] FIG. 8 is a cross-sectional diagram of principal parts of the external sound perception device shown in FIG. 7.

[FIG. 9] FIG. 9 is a cross-sectional diagram showing a modification of principal parts of the external sound perception device shown in FIG. 7.

[FIG. 10] FIG. 10 is a cross-sectional diagram showing another modification of principal parts of the external sound perception device shown in FIG. 7.

[Description of Embodiments]

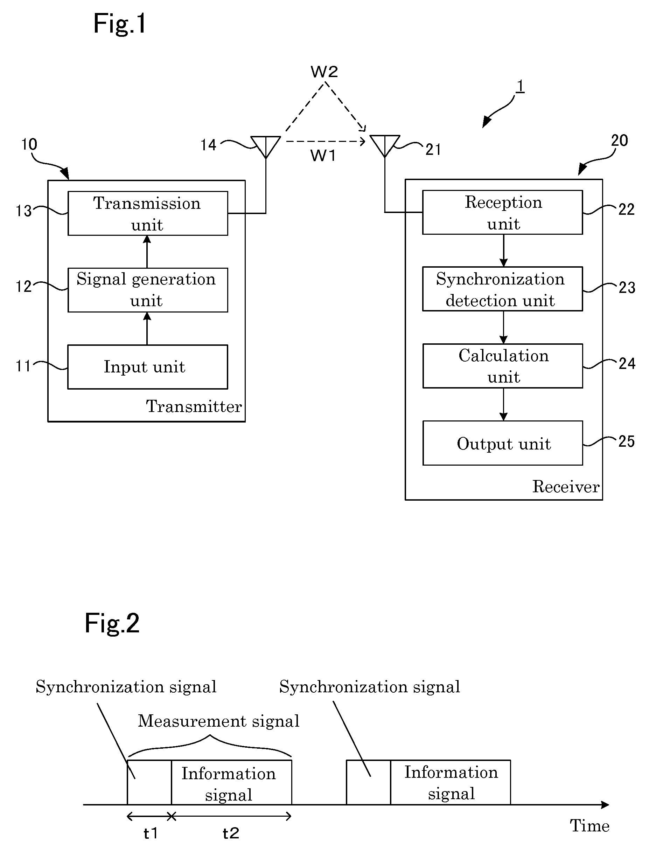

Below, an embodiment of the present invention will now be described with reference to the appended drawings. FIG. 1 is a block diagram of a device for measuring propagation delay characteristics in a multipath propagation environment according to one embodiment of the present invention (hereinafter simply referred to as a "measurement device"). As shown in FIG. 1, a measurement device 1 of this embodiment comprises a transmitter 10 and a receiver 20 that are provided apart from each other. The transmitter 10 and the receiver 20 are placed in a multipath propagation environment where there are a plurality of propagation paths between the transmitter 10 and the receiver 20. The transmitter 10 and the receiver 20 can both be configured as a dedicated measurement unit or can be incorporated in a terminal unit such as a radio, a television, a personal computer, a portable terminal, a wireless LAN, or the like.

The transmitter 10 comprises an input unit 11, a signal generation unit 12, and a transmission unit 13. A user can input configurational information into the input unit 11, such as a frequency range, a frequency interval (corresponding to the frequency resolution), and a maximum delay time for a measurement signal to be transmitted toward the receiver 20, and it is thus possible to set in advance, for example, a frequency range at which the user wishes perform measurement. The input unit 11 may be configured to automatically retrieve configurational information such as a frequency range that is stored in a memory or the like beforehand, instead of being configured to receive a frequency range or the like inputted by a user. The signal generation unit 12 generates an information signal composed of sinusoidal waves based on the configurational information inputted from the input unit 11 and adds a synchronization signal as shown in FIG. 2 to generate a measurement signal. The transmission unit 13 transmits the generated measurement signal as a radio signal via an antenna 14.

The receiver 20 comprises a reception unit 22 for receiving the measurement signal transmitted from the transmitter 10 via an antenna 21, a synchronization detection unit 23 for acquiring the reception timing of the information signal based on the detection of a synchronization signal contained in the received measurement signal, a calculation unit 24 for calculating the instantaneous frequency characteristics of the received information signal, and an output unit 25 for outputting propagation delay characteristics corresponding to the frequency of the information signal based on the instantaneous frequency characteristics.

Next, the operation of the measurement device 1 having the above-described configuration will now be described. First, items of configurational information such as a frequency range, a frequency interval, and a maximum delay time are inputted into the input unit 11 of the transmitter 10. Concerning the configurational information, for example, the frequency range is set in accordance with the frequency used in a communications apparatus for which propagation delay characteristics are measured. As specific examples, a necessary range can be set based on the carrier frequency band of each channel, such as a range of from 2 MHz to 26 MHz in the case of radio broadcast, a range of from 90 MHz to 770 MHz in the case of television broadcast, and a range of from about 2000 MHz to about 6000 MHz in the case of a wireless LAN. Moreover, the frequency interval can be set based on, for example, the resolution of a frequency at which propagation delay characteristics are obtained. The maximum delay time is a value expected in a multipath propagation environment, and the time length of an information signal is set based on this maximum delay time.

When the input of configurational information is complete, as shown in FIG. 2, the signal generation unit 12 sets a sinusoidal wave signal having a known frequency that is outside the inputted frequency range at a time width t1 as a synchronization signal and, also, sets a sinusoidal wave signal having a frequency corresponding to the lower limit value of the inputted frequency range at a time width t2 as an information signal, to thereby generate a measurement signal. The time width t2 of the information signal corresponds to the inputted maximum delay time.

The resulting measurement signal is transmitted by the transmission unit 13 via the antenna 14, travels along a plurality of propagation paths (such as propagation paths of a direct wave W1 and a reflected wave W2), and is received by the reception unit 22 via the antenna 21 of the receiver 20. The synchronization detection unit 23 detects the reception timing of the information signal contained in the received measurement signal based on the synchronization signal, and extracts the information signal.

The calculation unit 24 calculates an instantaneous phase from a Hilbert transform signal obtained by subjecting the received information signal to the Hilbert transform. That is, with the received information signal being x(t) and the Hilbert transform signal obtained by subjecting x(t) to the Hilbert transform being xh(t), instantaneous phase $\varphi(t)$ is represented by the following formula:

$$\varphi(t) = \tan^{-1}(x_h(t)/x(t))$$

The calculation unit 24 calculates an instantaneous frequency by time-differentiating the resulting instantaneous phase $\varphi(t)$. That is, instantaneous frequency fi(t) is represented by the following formula:

$$fi(t) = (1/2\pi) \cdot d\varphi(t)/dt$$

The resulting instantaneous frequency characteristics indicate propagation delay characteristics at the frequency of the information signal as demonstrated in the working example below. Therefore, when propagation delay characteristics based on the instantaneous frequency characteristics and the frequency of the information signal are outputted by the output unit 25, propagation delay characteristics corresponding to the frequency can be obtained. Thereafter, the frequency of the information signal is increased at preset frequency intervals within a preset frequency range, then the above-described procedure is repeated using measurement signals containing information signals having various frequencies to calculate respective instantaneous frequencies, and it is thus possible to easily and accurately obtain propagation delay characteristics corresponding to given frequencies. Accordingly, it is possible to measure the frequency dependency of the electromagnetic wave propagation delay characteristics of communication apparatuses in general whose propagation environments are temporally unchanged or barely influenced by a temporal change, such as communication paths of radios/televisions and wireless LANs, thus making it possible to obtain useful information for reducing multipath interference. The output unit 25 may be configured to output normalized instantaneous frequency characteristics that are normalized by the frequency of the corresponding information signal, and this configuration is particularly effective when the set frequency range is broad.

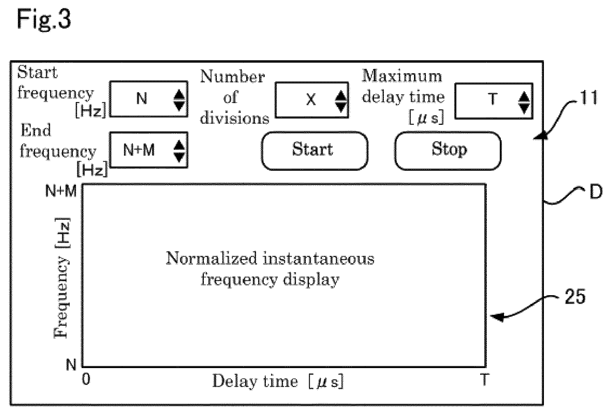

One embodiment of the present invention has been described in detail above, but the specific aspects of the present invention are not limited to the above embodiment. For example, although the configurational information of the information signal contained in the measurement signal is inputted via the input unit 11 provided in the transmitter 10 in the above embodiment, this input unit 11 may be provided in the receiver 20, and the measurement device may be configured such that transmitting the configurational information inputted into the receiver 20 causes the signal generation unit 12 to generate a measurement signal. FIG. 3 shows one example of a display screen D of the receiver 20 in such a configuration. The input unit 11 into which configurational information can be inputted through a touch panel or the like is provided in the upper part of the display screen D, and the output unit 25 that shows a normalized instantaneous frequency calculated by the calculation unit 24 is provided in the lower part of the display screen D. The normalized instantaneous frequency can be displayed by way of, for example, a two-dimensional gray scale map, color map, contour map, or the like.

The measurement signal transmitted and received between the transmitter 10 and the receiver 20 is not necessarily limited to electromagnetic waves, and may be sound waves or the like. In this case, in the measurement device 1 of this embodiment, a speaker, a vibrator, a hydrophone, and the like can be used in place of the transmission unit 13 and the antenna 14, and a microphone, an acceleration sensor, a hydrophone, and the like can be used in place of the reception unit 22 and the antenna 21.

The measurement device 1 for which sound waves are used as a measurement signal can obtain propagation delay characteristics of a voice signal that propagates in a concert hall and a lecture room, an audible bone-conducted sound and bone-conducted ultrasound that propagate in the head, medical ultrasound from an ultrasound diagnostic apparatus that propagates in a living body, underwater ultrasound from a fish finder, and the like. As for specific examples of a frequency range to be set, a necessary frequency range can be extracted from a 20 Hz to 20 kHz range in the case of a voice from a speaker or the like, a 20 Hz to 100 kHz range in the case of a bone-conducted audible sound and bone-conducted ultrasound, a 1 Hz to 20 MHz range in the case of medical ultrasound used in ultrasound examinations, and a 15 kHz to 200 kHz range in the case of underwater ultrasound of a fish finder. Accordingly, the frequency dependency of sound wave propagation paths from a speaker, a vibrator, and the like can be measured, and it is thus possible to obtain information useful for a reduction of multipath interference, a detailed analysis of propagation paths, identification of a propagation system, and, furthermore, visualization of accuracy.

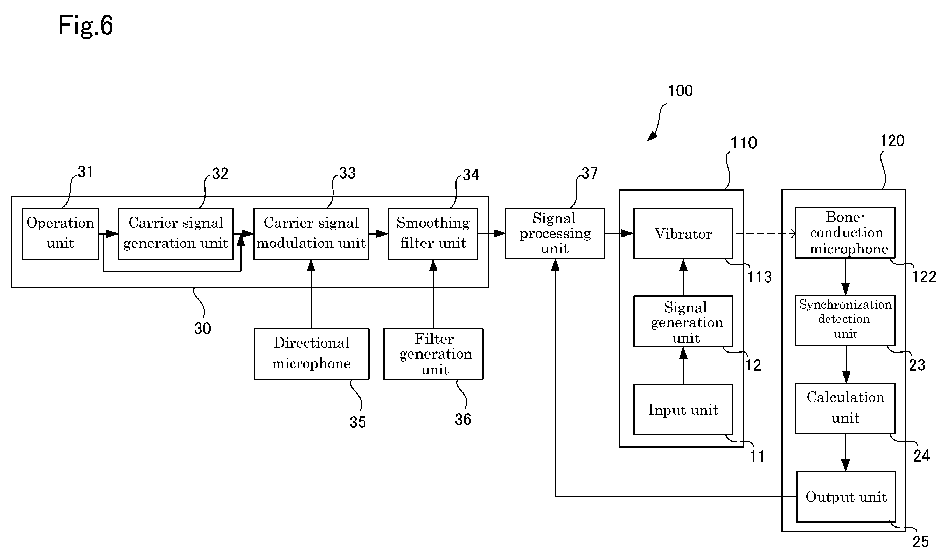

The measurement device 1 can be incorporated in an external sound perception device capable of perceiving an external sound such as a voice or an environmental sound as mechanical vibrations. FIG. 6 is a block diagram of an external sound perception device according to one embodiment of the present invention. An external sound perception device 100 shown in FIG. 6 comprises a directional microphone 35 into which an external sound is inputted, a vibration signal generation unit 30 for generating a vibration signal based on a sound signal inputted into the directional microphone 35, a signal processing unit 37 for processing the vibration signal to generate an output signal, and a vibrator 113 for transferring mechanical vibrations to a living body based on the output signal, and, furthermore, the external sound perception device 100 comprises a transmitter 110 and a receiver 120. Although FIG. 6 shows a configuration corresponding to only one ear, the same configuration can be provided for the other ear as well.

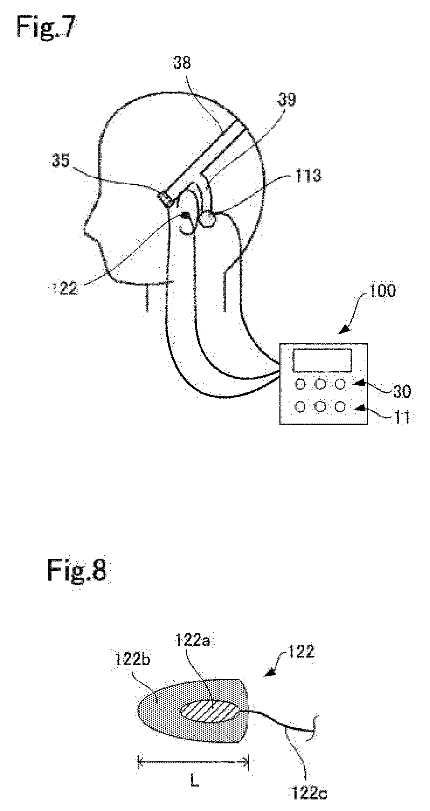

FIG. 7 is a diagram showing the overall configuration of the external sound perception device shown in FIG. 6. As shown in FIG. 7, the directional microphone 35 is provided at each end of an elastically deformable, hairband-type attachment 38 and is placed such that the main shaft faces laterally outward in the vicinity of each ear when the attachment 38 is attached to a user's head. Moreover, the vibrator 113 is supported by a support 39 branching from the attachment 38 and is placed in the vicinity of each of the right and left mastoid processes.

As shown in FIG. 6, an external sound inputted into the directional microphone 35 is amplified and then inputted into the vibration signal generation unit 30. In the vibration signal generation unit 30, a carrier signal generation unit 32 generates a carrier signal having a predetermined amplitude and frequency, a carrier signal modulation unit 33 modulates this carrier signal based on a sound signal, and thereby a vibration signal is generated that corresponds to the sound inputted into the directional microphone 35. The frequency of the carrier signal may be in the audible or ultrasound range. The principle of modulation by the carrier signal modulation unit 33 can be changed via the operation unit 31, and in the case where the directional microphone 35 is provided in the vicinity of each of the right and left ears, it is possible to input mutually different modulation conditions to the respective directional microphones 35.

A vibration signal generated in the carrier signal modulation unit 33 is smoothed in a smoothing filter unit 34 and then outputted to the signal processing unit 37 to be subjected to signal processing. The vibrator 113 vibrates based on an output signal from the signal processing unit 37. Consequently, mechanical vibrations are transferred to a human body from the vibrator 113 based on the external sound inputted into the directional microphone 35. The carrier signal modulation unit 33 is controlled so as not to output a vibration signal when no sound signal is inputted.

The filter factor of the smoothing filter unit 34 is set by a filter generation unit 36. The filter generation unit 36 applies a frequency-swept sinusoidal wave signal to the vibrator 113 to measure the frequency characteristics of impedance between the terminals of the vibrator 113 and sets a filter factor based on the measured impedance characteristics. A specific configuration of the filter generation unit 36 is disclosed in, for example, Japanese Patent No. 4423398.

Since the configurations of the transmitter 110 and the receiver 120 are identical to the configurations of the transmitter 10 and the receiver 20 included in the above-described measurement device 1, respectively, the same components as in FIG. 1 are given the same reference numbers in FIG. 6. The measurement signal generated in the signal generation unit 12 of the transmitter 110 is transmitted as mechanical vibrations from the vibrator 113, propagates along a plurality of propagation paths of a human body by way of audible bone-conduction or ultrasonic bone-conduction, and is received by a bone-conduction microphone 122 included in the receiver 120.

As shown in FIG. 8, in the bone-conduction microphone 122, a detection unit 122a such as an acceleration pickup is covered with a protective material 122b made of urethane or the like to have an earplug shape. Once attached to a user's earhole, the detection unit 122a outputs a measurement signal via a cable 122c. It is preferable that the bone-conduction microphone 122 has a length L of about 1.5 to 2.5 cm so that the bone-conduction microphone 122 can be securely fixed to the earhole. The receiver 120 outputs, from an output unit 25 to the signal processing unit 37, propagation delay characteristics corresponding to the frequency of the information signal contained in the received measurement signal. The signal processing unit 37 performs signal processing on the vibration signal based on the propagation delay characteristics.

Since the external sound perception device 100 of this embodiment is configured such that a vibration signal generated based on an inputted external sound is filtered in the smoothing filter unit 34 and then transmitted from the vibrator 113, the frequency characteristics of the transmitted mechanical vibrations can be smoothed in the stipulated frequency band. Consequently, distortion of an external sound such as a voice or an environmental sound can be suppressed, and it is thus possible for a user to clearly perceive the external sound.

Moreover, the signal processing of the signal processing unit 37 on the vibration signal based on the propagation delay characteristics measured between the transmitter 110 and the receiver 120 makes it possible for a user to more clearly perceive the external sound. Details of signal processing based on propagation delay characteristics are not particularly limited, and, for example, it is possible to flatten the frequency characteristics of a signal that reaches the ear on the ipsilateral side and cancel a signal that reaches the ear on the contralateral side.

The configuration of the vibration signal generation unit 30 is not particularly limited as long as a vibration signal can be generated based on a sound signal inputted into the directional microphone 35. For example, as disclosed in Japanese Patent No. 4953081, the vibration signal generation unit may be a component that obtains a spatial characteristics parameter by calculating the level difference and/or the time difference of sound signals between a plurality of directional microphones and correct any of the vibration signals such that the transfer characteristics parameter corresponding to the level difference and/or the time difference of vibration signals between a plurality of directional microphones has a value that is obtained by multiplying the spatial characteristics parameter by a correction factor.

Moreover, the bone-conduction microphone 122 may be a component, the detection unit 122a of which is directly stuck to a desired part of the head, face, or the like using an adhering means such as a pressure-sensitive adhesive, wax, double-sided tape, etc., unlike in this embodiment where the detection unit 122a is covered with the protective material 122b.

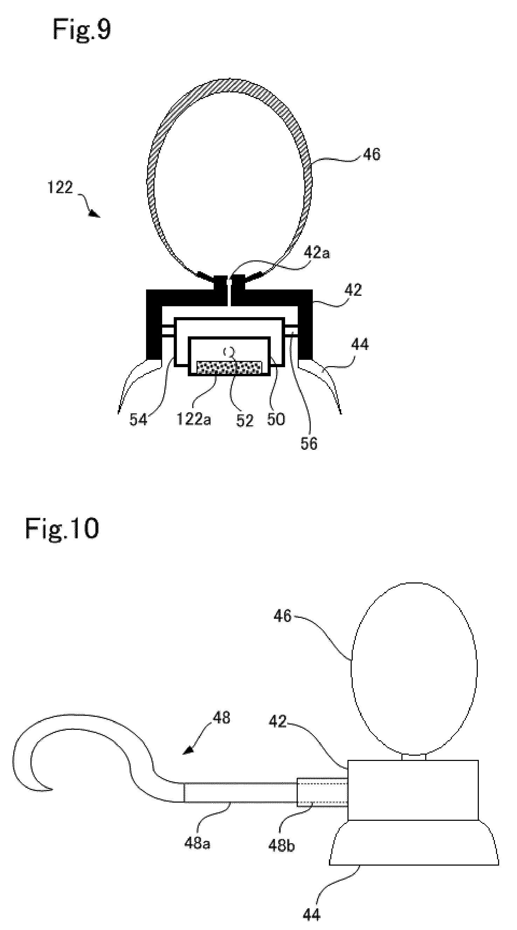

Furthermore, as shown in FIG. 9, it is possible to configure the bone-conduction microphone 122 by supporting the detection unit 122a by a gimbal mechanism so as to be pivotable around two axes that are perpendicular to each other. The detection unit 122a shown in FIG. 9 is fixed to a first framework 50 so as to expose a detection surface, and the first framework 50 is pivotably supported by a second framework 54 via a first support shaft 52. The second framework 54 is pivotably supported inside a case 42 via a second support shaft 56 that is perpendicular to the first support shaft 52. The detection surface of the detection unit 122a slightly projects from the opening of the case 42 and is configured such that when a sucker 44 is attached to a predetermined attachment site, the detection surface of the detection unit 122a comes into contact with and presses the attachment surface. A communicating hole 42a is formed in the center of the bottom part (the upper part in the drawing) of the case 42, and a bulb 46 is connected to the communicating hole 42a. The bulb 46 is made of an elastic material such as rubber and is configured to be elastically deformable when pressed. The interior space of the bulb 46 is in communication with the interior of the case 42 via the communicating hole 42a.

With the bone-conduction microphone 122 shown in FIG. 9, when the sucker 44 is pressed against a predetermined attachment site on a human body (such as the jaw, throat, neck, mastoid process, or the like) while squeezing the bulb 46 by hand, the detection unit 122a comes into contact with the human body. Since the detection unit 122a is supported so as to be pivotable around two axes by a gimbal mechanism, even when the surface of the attachment site has a complex three-dimensional curved surface, the detection unit 122a can be in a position well-suited for such a curved surface and can be reliably brought into contact with the human body. Thereafter, when the hand squeezing the bulb 46 is removed, a negative pressure is created inside the case 42 due to the suction force of the reforming bulb 46, and it is thus possible to reliably attach the bone-conduction microphone 122 by means of the sucker 44, and accordingly the positional shift and postural change of the bone-conduction microphone 122 over time can be reliably prevented. When removing the bone-conduction microphone 122, the bulb 46 is squeezed by hand to cancel the negative pressure inside the case 42, and it is thus possible to easily remove the sucker 44.

In the case of attaching the bone-conduction microphone 122 shown in FIG. 9 to the mastoid process, it is possible to more reliably attach the bone-conduction microphone 122 without adversely affecting the appearance by providing a hook-like latch 48 on the outer surface of the case 42 as shown in FIG. 10 and hanging this latch 48 on the ear. The latch 48 includes a stretchable part 48a made of, for example, rubber or a spring and a threaded part 48b screw-fitted to the case 42 and is thus configured to be stretchable and rotatable relative to the case 42. Accordingly, any variation between different users with respect to fitment and attachment stability can be prevented.

Examples

The present invention shall be described below by way of examples, but the present invention is not limited to the following examples.

The frequency dependency of delay characteristics concerning the propagation of bone-conducted ultrasound in the head was measured by utilizing the measurement method of the measurement device of the above embodiment. Measurement conditions were as follows:

[Measurement target] Propagation of ultrasonic vibrations in a living human head (Input signals into the left mastoid process and measure an acceleration response at the entrance of the right (contralateral side) external auditory canal)
[Equipment] Transmitter: Bone-conduction vibrator, Receiver: Acceleration pickup
[Measurement frequency] Frequency range: 28-32 kHz, Frequency interval: 100 Hz
[Transmitted signal] 10 Sinusoidal waves

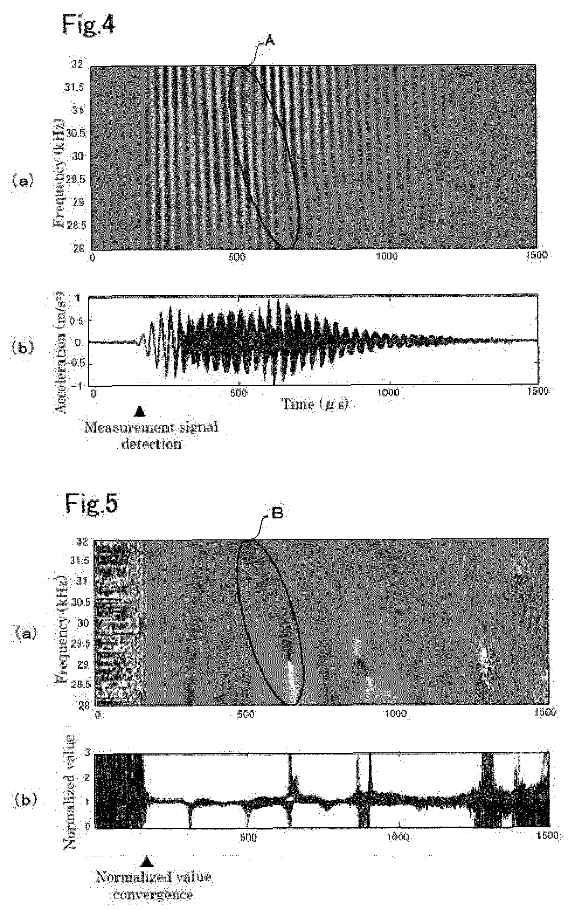

FIG. 4 shows time waveforms of measurement signals received by the receiver. FIG. 4(a) shows time waveforms of measurement signals arranged next to each other, with the vertical axis representing the information signal frequency and the horizontal axis representing the delay time. FIG. 4(b) shows superposed time waveforms of all frequencies shown in FIG. 4(a). FIG. 5 shows normalized instantaneous frequency waveforms calculated from the time waveforms of measurement signals shown in FIG. 4. FIG. 5(a) shows normalized instantaneous frequency waveforms arranged next to each other, with the vertical axis representing the information signal frequency and the horizontal axis representing the delay time. FIG. 5(b) shows superposed normalized instantaneous frequency waveforms of all frequencies shown in FIG. 5(a).

It can be observed from FIG. 4 that in the time waveforms of the received measurement signals, vibrations start at nearly the same delay time without being dependent on the signal frequency, but the portion where the phase of the sinusoidal wave steeply changes is different in accordance with the frequency (for example, region Afrom 32 kHz, 500s to 28 kHz, 700s shown in FIG. 4(a)). A comparison of FIGS. 4 and 5 reveals that the delay time when the measurement signal is detected in FIG. 4 matches the delay time when the value of the normalized instantaneous frequency converges to approximately 1 in FIG. 5. Moreover, the portion where the phase of the time waveform of the measurement signal steeply changes in FIG. 4 (for example, region A) matches the portion where the value of the normalized instantaneous frequency is not 1 in FIG. 5 (for example, region B). It can be understood from these results that both the time waveform and the normalized instantaneous frequency waveform of a measurement signal are not frequency-dependent with respect to a first-wave path but are frequency-dependent with respect to subsequent paths, and therefore the propagation delay characteristics of a measurement signal can be measured based on a normalized instantaneous frequency.

[Reference Signs List]

| | |
|---|---|
| 1 | Measurement device |
| 10 | Transmitter |
| 11 | Input unit |
| 12 | Signal generation unit |
| 20 | Receiver |
| 23 | Synchronization detection unit |
| 24 | Calculation unit |
| 100 | External sound perception device |

**Claims**

1. A method for measuring propagation delay characteristics in a multipath propagation environment, wherein the propagation delay characteristics are measured between a transmission means and a reception means provided in the multipath propagation environment, the method comprising:

    a transmission step of transmitting a measurement signal comprising an information signal having a predetermined frequency from the transmission means;
    a reception step of receiving the measurement signal that has traveled along a plurality of propagation paths by the reception means;
    a calculation step of performing Hilbert transform on the received information signal to calculate instantaneous frequency characteristics from a resulting Hilbert transform signal; and
    an output step of outputting propagation delay characteristics corresponding to the frequency of the information signal based on the instantaneous frequency characteristics.

2. The method for measuring propagation delay characteristics according to claim 1, wherein the output step comprises normalizing the instantaneous frequency characteristics to output normalized instantaneous frequency characteristics.

3. The method for measuring propagation delay characteristics according to claim 1 or 2, wherein the propagation delay characteristics of bone-conducted ultrasound in the head of a living body are measured.

4. A device for measuring propagation delay characteristics in a multipath propagation environment, wherein the propagation delay characteristics are measured between a transmission means and a reception means provided in the multipath propagation environment, wherein
the transmission means is configured to transmit a measurement signal comprising an information signal having a predetermined frequency, and the reception means is configured to receive the measurement signal that has traveled along a plurality of propagation paths; and
the device comprises:

    a calculation unit for performing Hilbert transform on the information signal received by the reception means to calculate instantaneous frequency characteristics from a resulting Hilbert transform signal, and
    an output unit for outputting propagation delay characteristics corresponding to the frequency of the information signal based on the instantaneous frequency characteristics.

5. An external sound perception device comprising a directional microphone into which an external sound is inputted, a vibration signal generation means for generating a vibration signal based on a sound signal inputted into the directional microphone, a signal processing unit for processing the vibration signal to generate an output signal, and a vibrator for transferring mechanical vibrations to a living body based on the output signal, wherein
the external sound perception device further comprises:

    a transmission means and a reception means that are for attachment to different parts of a human body and are capable of measuring propagation delay characteristics in a multipath propagation environment, wherein the transmission means is configured to transmit a measurement signal comprising an information signal having a predetermined frequency via the vibrator, and the reception means is configured to receive the measurement signal that has traveled along a plurality of propagation paths of the human body,

a calculation unit for performing Hilbert transform on the information signal received by the reception means to calculate instantaneous frequency characteristics from a resulting Hilbert transform signal, and

an output unit for outputting propagation delay characteristics corresponding to the frequency of the information signal based on the instantaneous frequency characteristics, and

the signal processing unit performs signal processing on the vibration signal based on the propagation delay characteristics.

## Fig.1

W2

14

W1

21

1

10

20

| Transmission unit | 13 |
| Signal generation unit | 12 |
| Input unit | 11 |

Transmitter

| Reception unit | 22 |
| Synchronization detection unit | 23 |
| Calculation unit | 24 |
| Output unit | 25 |

Receiver

## Fig.2

Synchronization signal

Synchronization signal

Measurement signal

Information signal

Information signal

t1     t2

Time

## Fig.3

Start frequency [Hz] : N ⬍
End frequency [Hz] : N+M ⬍
Number of divisions : X ⬍
Maximum delay time [μs] : T ⬍
Start
Stop

11

D

Normalized instantaneous frequency display

N+M

Frequency [Hz]

N
0
Delay time [μs]
T

25

## Fig.4

(a)

A

(b)

▲
Measurement signal
detection

## Fig.5

(a)

B

(b)

▲
Normalized value
convergence

Fig.6

EP 3 012 985 A1

Fig.7

Fig.8

Fig.9

46

122

42a

42

44

54  122a  52  50

56

Fig.10

46

48

42

48a

48b

44

**INTERNATIONAL SEARCH REPORT**

| International application No. |
| --- |
| PCT/JP2014/065889 |

A. CLASSIFICATION OF SUBJECT MATTER
*H04B17/00*(2006.01)i, *G10L25/18*(2013.01)i, *H04R25/00*(2006.01)i

According to International Patent Classification (IPC) or to both national classification and IPC

B. FIELDS SEARCHED

Minimum documentation searched (classification system followed by classification symbols)
H04B17/00, G10L25/18, H04R25/00

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho  1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | ZEGER et al., 'Effect of Multipath Interference on an FM Data Subcarrier.' In: Proc. of IEEE Communications, Computers and Signal Processing, 1997. 10 Years PACRIM 1987–1997-Networking the Pacific Rim., Vol.1, IEEE, 1997.08.20, p.p.40-44 | 1-4<br>5 |
| Y<br>A | BOASHASH, 'Estimating and interpreting the instantaneous frequency of a signal. I. Fundamentals.', In: Proc. of the IEEE, Vol.80. 4, IEEE, 1992.04, p.p.520-538 | 1-4<br>5 |

| ☒  Further documents are listed in the continuation of Box C. | ☐  See patent family annex. |
| --- | --- |

| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search<br>    11 August, 2014 (11.08.14) | Date of mailing of the international search report<br>    02 September, 2014 (02.09.14) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/065889

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | SANTAGATI et al., 'Distributed MAC and rate adaptation for ultrasonically networked implantable sensors.', In: Proc. of Mesh and Ad Hoc Communications and Networks (SECON), 2013 10th Annual IEEE Communications Society Conference., IEEE, 2013.02.06, p.p.104-112 | 3<br>5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H98768 A
- JP 4423398 B
- JP 4953081 B

**Non-patent literature cited in the description**

- **YOSHIO KARASAWA.** Multipath Propagation Theory and Modeling in Wideband Mobile Radio - Bridging between Propagation and Systems by the ETP Model. *IEICE TRANS. COMMUN.,* 2000, vol. J83-B (12), 1651-1660
- *ARTA, http://www.artalabs.hr/download.htm*